# EUROPÄISCHE PATENTSCHRIFT

(11) **EP 3 698 453 B1**
(45) Veröffentlichungstag und Bekanntmachung des Hinweises auf die Patenterteilung: **08.12.2021**
(21) Anmeldenummer: 18786675.1
(22) Anmeldetag: 08.10.2018
(51) Int. Cl.: H02J 50/10, H01F 38/14, H02G 3/22, H05K 5/00

(54) **SYSTEM ZUR BERÜHRUNGSLOSEN ÜBERTRAGUNG VON ELEKTRISCHER ENERGIE AN EIN AUF EINEM BODEN EINER ANLAGE VERFAHRBARES MOBILTEIL**
SYSTEM FOR CONTACTLESSLY TRANSMITTING ELECTRIC ENERGY TO A MOBILE PART WHICH CAN BE MOVED ON THE BASE OF A SYSTEM
SYSTÈME DE TRANSMISSION SANS CONTACT D'ÉNERGIE ÉLECTRIQUE À UNE PARTIE MOBILE POUVANT ÊTRE DÉPLACÉE SUR UN PLANCHER D'UN ÉQUIPEMENT

(30) Priorität: 20.10.2017 DE 102017009793
(43) Veröffentlichungstag der Anmeldung: 26.08.2020
(73) Patentinhaber: SEW-EURODRIVE GmbH & Co. KG, 76646 Bruchsal (DE)
(72) Erfinder: JAHN, Nils-Malte, 69124 Heidelberg (DE)
(86) Internationale Anmeldenummer: PCT/EP2018/025260
(87) Internationale Veröffentlichungsnummer: WO 2019/076482

(56) Entgegenhaltungen:
- EP-A1- 3 185 395
- DE-A1-102009 057 437
- DE-B3-102011 119 606
- US-A1- 2014 361 635
- US-A1- 2015 244 182

## Beschreibung

Die Erfindung betrifft ein System zur berührungslosen Übertragung von elektrischer Energie an ein auf einem Boden einer Anlage verfahrbares Mobilteil.

Es ist allgemein bekannt, elektrische Energie über eine induktive Kopplung zu übertragen.

**Aus der** US 2015/244182 A1 **ist eine eingebette Schnittstelle zur kabellosen Energieübertragung bekannt.**

**Aus der** DE 10 2009 057437 A1 **ist eine Anordnung zum induktiven Beladen eines Energiespeichers eines Fahrzeugs bekannt.**

**Aus der** US 2014/361635 A1 **ist ein kontaktloses Versorgungssystem bekannt.**

**Aus der** EP 3 185 395 A1 ist **eine Leistungsübertragunganordnung bekannt.**

**Aus der** DE 10 2011 119 606 B3 **ist eine Ladestation bekannt.**

Der Erfindung liegt daher die Aufgabe zugrunde, eine einfach herstellbare Ladeeinheit für ein in der Anlage bewegbares Mobilteil bereit zu stellen.

Erfindungsgemäß wird die Aufgabe bei dem System nach den in Anspruch 1 angegebenen Merkmalen gelöst.

Wichtige Merkmale der Erfindung bei dem System sind, dass das System zur berührungslosen Übertragung von elektrischer Energie an ein auf einem Boden einer Anlage verfahrbares Mobilteil vorgesehen ist, wobei im Bodenmaterial des Bodens eine Stufenbohrung eingebracht ist, insbesondere angeordnet ist,
wobei ein Rahmenteil auf der Stufe der Stufenbohrung, insbesondere aufliegend, angeordnet ist,
wobei eine Ladeeinheit vom Rahmenteil aufgenommen ist,
wobei die Ladeeinheit ein Aufnahmeteil aufweist, dass zwischen einem oberen Deckelteil und einem unteren Deckelteil angeordnet ist,
wobei an der Innenseite des oberen Deckelteils eine Primärwicklung angeordnet ist,
wobei die Primärwicklung von einer elektronischen Schaltung gespeist wird,
die mittels eines Kabels mit elektrischer Energie versorgt wird,
wobei das Kabel zumindest teilweise in einem Kabelführungsteil aufgenommen ist,
wobei das Kabelführungsteil in einer bezogen auf die Stufenbohrung, insbesondere von der Bohrungsmittelachse, radial sich erstreckenden Nut angeordnet ist,
wobei die Nut durch die Stufe der Stufenbohrung hindurchgeführt ist,
so, dass das Kabel unterhalb der Stufe der Stufenbohrung zugeführt wird,
wobei die Nut in demjenigen ersten Bereich, in welchem das Kabelführungsteil aufgenommen ist, insbesondere in Umfangsrichtung breiter ist als in einem radial weiter entfernten zweiten Bereich, insbesondere als in einem radial weiter außen angeordneten zweiten Bereich, insbesondere wobei der vom zweiten Bereich überdeckte Radialabstandsbereich größer ist als der vom ersten Bereich überdeckte Radialabstandsbereich, insbesondere wobei die Nut im zweiten Bereich oberhalb der Stufe angeordnet ist.

Von Vorteil ist dabei, dass ein Kabelführungsteil in den ersten Bereich einführbar ist, so dass das durch den zweiten Bereich der Nut herangeführte Kabel in den tieferen Bereich der Stufenbohrung führbar ist.

Bei einer vorteilhaften Ausgestaltung ist an der Unterseite des Mobilteils eine Sekundärwicklung angeordnet, welche mit der Primärwicklung mittels Erreichen eines Bereichs in der Verfahrfläche induktiv koppelbar ist. Von Vorteil ist dabei, dass bei Erreichen der Position ausreichender induktiver Kopplung oder optimaler Kopplung zwischen Primärwicklung und Sekundärwicklung das Mobilteil mit elektrischer Leistung versorgbar ist über die induktive Kopplung. Somit ist ein Energiespeicher des Mobilteils beladbar. Durch die Ausführung als Stufenbohrung sind Sekundärwicklung und Primärwicklung als Ringwicklungen ausführbar, welche koaxial zueinander während der Beladung ausgerichtet sind. Auf diese Weise ist sogar ein Drehen des Mobilteils, wobei die Drehachse parallel und sogar koaxial zur Mittelachse und/oder Bohrungsachse der Stufenbohrung ausgerichtet ist. Somit ist das Mobilteil mit einem omnidirektionalen Antrieb oder einem Panzerantrieb ausstattbar, so dass ein Drehen des Mobilteils auf der Stelle ermöglicht ist und trotzdem während der Drehung ein Beladen ungestört ausführbar ist.

Vorteilig ist also, dass die Drehsymmetrie der Stufenbohrung vorhanden ist und das Kabel zur Versorgung einer elektronischen Schaltung, die das Primärteil versorgt, geschützt in den Raumberiech der Stufenbohrung zuführbar ist.

Bei einer vorteilhaften Ausgestaltung ist das Kabel durch eine an dem unteren Deckelteil angeordnete Kabelverschraubung in die Ladeeinheit eingeführt. Von Vorteil ist dabei, dass ein dichtes Zuführen des Kabels ermöglicht ist.

Bei einer vorteilhaften Ausgestaltung weist das Kabelführungsteil einen in Umfangsrichtung aus einem Grundabschnitt, also Grundbereich, des Kabelführungsteils hervorragenden Flügelbereich auf, welcher das Kabelführungsteil in Nutrichtung begrenzt, insbesondere also ein Hineinbewegen des Kabelführungsteils in die Nut begrenzt. Von Vorteil ist dabei, dass der Flügelbereich in Umfangsrichtung hervorragt und somit an der Wand der Stufenbohrung anliegt und somit ein Hineinwandern des Kabelführungsteils in die Nut begrenzt.

Bei einer vorteilhaften Ausgestaltung umfasst der vom Grundabschnitt überdeckte Radialabstandsbereich den vom Rahmenteil und/oder von der Stufe überdeckten Radialabstandsbereich. Von Vorteil ist dabei, dass der Grundabschnitt in die Nut eingelegt ist und somit das Kabelführungsteil formschlüssig verbunden ist mit dem Betonmaterial des Bodens und das Kabel ins Innere der Stufenbohrung, also auf einen kleineren Radialabstand geführt und somit geschützt ist im Vergleich zum lichten Innendurchmesser des Rahmenteils. Somit ist das Kabel schützbar von Einwirkungen des Rahmenteils.

Bei einer vorteilhaften Ausgestaltung überlappt der vom Grundabschnitt überdeckte Radialabstandsbereich mit dem vom ersten Bereich der Nut überdeckten Radialabstandsbereich. Von Vorteil ist dabei, dass der Grundabschnitt in die Nut eingelegt ist und somit das Kabelführungsteil formschlüssig verbunden ist mit dem Betonmaterial des Bodens.

Bei einer vorteilhaften Ausgestaltung ist das obere Deckelteil mit dem Aufnahmeteil dicht verbunden, insbesondere schraubverbunden,
und/oder
das untere Deckelteil ist mit dem Aufnahmeteil dicht verbunden, insbesondere schraubverbunden. Von Vorteil ist dabei, dass der vom Aufnahmeteil, vom oberen Deckelteil und vom unteren Deckelteil umgebene Raumbereich

Bei einer vorteilhaften Ausgestaltung ist eine elektronische Schaltung in dem vom Aufnahmeteil zusammen mit dem oberen Deckelteil und dem unteren Deckelteil insbesondere gehäusebildend umgebenen Raumbereich angeordnet,

insbesondere wobei die elektronische Schaltung mittels des Kabels versorgt wird mit elektrischer Leistung und wobei die Primärwicklung von der elektronischen Schaltung gespeist wird,

insbesondere wobei die elektronische Schaltung einen Wechselrichter aufweist, welcher über einen Gyrator einen Strom in die Primärwicklung einprägt. Von Vorteil ist dabei, dass die elektronische Schaltung geschützt anordenbar ist. Mittels des Gyrators ist eine Stromeinprägung erreichbar, so dass auch bei schwankender induktiver Kopplung ein hoher Wirkungsgrad erreichbar ist.

Bei einer vorteilhaften Ausgestaltung ist das obere Deckelteil aus Kunststoff, insbesondere aus für Licht transparentem Kunststoff ausgeführt, insbesondere so dass ein Anzeigemittel von der Verfahrfläche aus sichtbar ist, insbesondere wobei die elektronische Schaltung das Anzeigemittel aufweist. Von Vorteil ist dabei, dass eine einfach herstellbare geschützte Anzeige verwendbar ist.

Bei einer vorteilhaften Ausgestaltung umfasst der von der Stufenbohrung in Bohrungsrichtung überdeckte Bereich, insbesondere also der von der Stufenbohrung von der Verfahrfläche aus in Richtung der Mittelachse der Stufenbohrung überdeckte Bereich, den von einer im Bodenmaterial angeordneten Bewehrung in Bohrungsrichtung überdeckten Bereich. Von Vorteil ist dabei, dass die Stufenbohrung tiefer als eine der Bewehrungen im Boden vorsehbar ist. Somit ist eine stabile Montage ermöglicht und für anstehendes Wasser ein möglichst tiefes Niveau erreichbar.

Bei einer vorteilhaften Ausgestaltung weist das Rahmenteil an seiner der Stufe zugewandten Seite Einstellschrauben auf zum Ausrichten des Rahmenteils. Von Vorteil ist dabei, dass ein bündiges Ausrichten der Ladeeinheit ermöglicht ist.

Bei einer vorteilhaften Ausgestaltung weist das Rahmenteil einen in Umfangsrichtung umlaufenden zur Verfahrfläche hervorragenden radialen Außenrandberiech auf, so dass die Ladeeinheit zentrierend aufgenommen ist im Aufnahmeteil. Von Vorteil ist dabei, dass ein einfaches Aufnehmen und Zentrieren ermöglicht ist.

Bei einer vorteilhaften Ausgestaltung weist der Boden Bodenmaterial auf, auf welchem eine Beschichtung angeordnet ist, deren Oberfläche als Verfahrfläche für das Mobilteil fungiert. Von Vorteil ist dabei, dass die Beschichtung nicht nur auf dem Bodenmaterial, sondern auch auf dem oberen Deckelteil der Ladeeinheit vorsehbar ist.

Bei einer vorteilhaften Ausgestaltung ist das obere Deckelteil bündig zur Verfahrfläche angeordnet, insbesondere also die obere Oberfläche des Deckelteils in Flucht ist mit der Verfahrfläche. Von Vorteil ist dabei, dass das Überfahren des oberen Deckelteils ungehindert ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

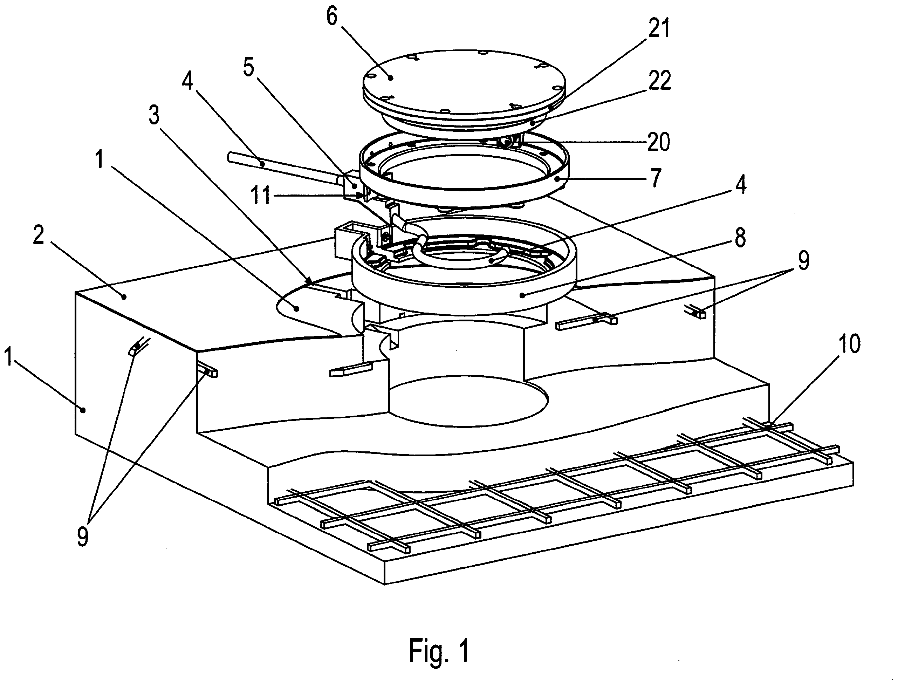

In der Figur 1 ist der erfindungsgemäße stationäre Teil eines Systems zur berührungslosen Übertragung von elektrischer Energie an ein Mobilteil in explodierter Darstellung dargestellt.

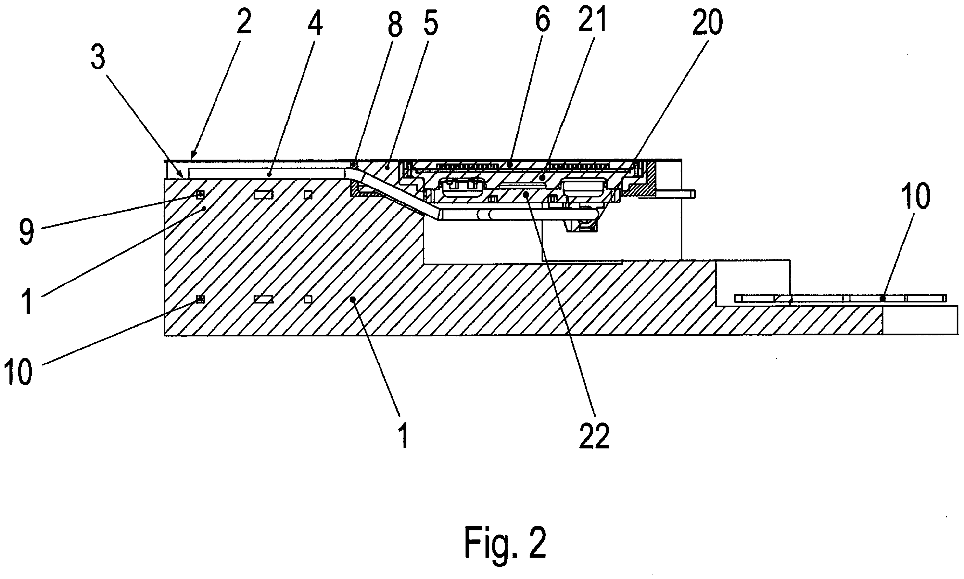

In der Figur 2 ist eine Schnittansicht des Teils dargestellt.

Wie in den Figuren dargestellt, ist das Mobilteil auf einer Verfahrfläche einer Anlage verfahrbar, welche mittels der Oberfläche der Beschichtung 2 eines Bodenmaterials 1 gebildet ist.

Eine Ladeeinheit ist in einer Ausnehmung des Bodenmaterials 3 angeordnet.

Hierzu ist die Ausnehmung als Stufenbohrung in das Bodenmaterial 3 ausgeführt, welche zumindest eine erste Bewehrung 9 durchdringt. Dabei sind im Bodenmaterial 1 zumindest die erste Bewehrung 9 und eine zweite Bewehrung 10 angeordnet, wobei jede der Bewehrung im Wesentlichen in einer zur Oberfläche der Beschichtung und/oder Verfahrfläche parallelen Ebene angeordnet ist. Die Bewehrungen 9 und 10 sind aus Stahl, insbesondere aus einer gitterförmigen Anordnung von Stahlstäben, ausgeführt.

Sie erste Bewehrung 9 ist von der Beschichtung 2 beabstandet.

Die Tiefe der Ausnehmung übersteigt die Tiefe der ersten Bewehrung 9.

Auf die Stufe der Stufenbohrung ist ein Rahmenteil 7 aufgelegt, das mittels zwischen Bodenmaterial und Rahmenteil 7 angeordneter Vergussmasse 8 ans Bodenmaterial 1 stoffschlüssig angebunden ist.

Im Rahmenteil 7, welches ringförmig ausgeformt ist, ist eine Ladeeinheit aufgenommen, welche ein Aufnahmeteil 21 aufweist, welches einen Raumbereich zumindest teilweise gehäusebildend umgibt, der an seiner Oberseite mittels eines Deckelteils 6 und der an seiner Unterseite mittels eines unteren Deckelteils 22 begrenzt ist. Das Deckelteil 6 ist mit dem Aufnahmeteil 21 verbunden und das untere Deckeiteil 22 ist ebenfalls mit dem Aufnahmeteil 21 verbunden. Das Aufnahmeteil 21 ist zwischen dem Deckelteil 22 und dem unteren Deckelteil 6 angeordnet, sodass das untere Deckelteil 22 vom Deckelteil 6 beabstandet ist.

Das Deckelteil 6 ist vorzugsweise aus Kunststoff ausgeführt. An der Unterseite des Deckelteils 6 sind Vertiefungen, insbesondere nuten, angeordnet, in welche die Primärwicklung eingelegt ist. Das Deckelteil 6 schließt mit der Verfahrfläche, also der Oberfläche der auf dem Bodenmaterial angeordneten Beschichtung 2 bündig ab, so dass das Deckelteil 6 vom Mobilteil überfahrbar ist.

Eine elektronische Schaltung zur Speisung der Primärwicklung ist im Raumbereich aufgenommen. Somit ist die elektronische Schaltung gehäusebildend umgeben von dem Aufnahmeteil 21, dem oberen Deckelteil 6 und dem unteren Deckelteil 22. Die elektronische Schaltung weist einen Wechselrichter auf, dessen gleichspannungsseitiger Anschluss mit dem Eingang eines als Gyrator ausgeführten Vierpols verbunden ist, wobei der Ausgang dieses Vierpols mit der Primärwicklung verbunden ist, wobei der Primärwicklung eine Kapazität derart in Reihe oder parallel zugeschaltet ist, dass die Eigenfrequenz des so entstandenen Schwingkreises der Frequenz der am wechselspannungsseitigen Anschluss des Wechselrichters bereit gestellten Wechselspannung gleicht.

Außerdem sind die Bauteile, wie Kapazität und Induktivität, des Gyrators, ebenfalls resonant abgeglichen auf die Frequenz.

Auf diese Weise fungiert der Wechselrichter zwar als Spannungsquelle, die Primärwicklung ist aber stromquellenartig versorgt, da der Vierpol das an seiner Eingangsseite vorhandene spannungsquellenartige Verhalten seiner Speisung in ein an seiner Ausgangsseite stromquellenartiges Verhalten umwandelt.

Die Primärwicklung ist vorzugsweise in eine rechteckspiralförmig verlaufende Vertiefung an der Innenseite des oberen Deckelteils 6 eingelegt.

Im Bodenmaterial 1 ist eine Nut 3 eingebracht, welche zur Stufenbohrung radial gerichtet verläuft. Vorzugsweise ist die Nut 3 in der Oberfläche des Betonmaterials 1 eingefräst.

Nach Einlegen des Kabels 4 in die Nut wird die Nut 3 mit Vergussmasse befüllt und danach die Beschichtung 2 auf die Vergussmasse und das Betonmaterial 1 aufgebracht.

Im Bereich der Einmündung der Nut 3 in die Stufenbohrung verläuft die Nut 3 mit abnehmendem Abstand zur Stufenbohrung mit zunehmender Tiefe. Dabei ist vorzugsweise eine lineare Schrägung ausgeführt.

Direkt angrenzend an die Stufenbohrung ist in einem ersten Radialabstandsbereich die Nut breiter ausgeführt als radial außerhalb dieses Radialabstandsbereichs.

Ein Kabelführungsteil 5 ist mit seinem Grundabschnitt in der breiteren Nut angeordnet. Am Grundabschnitt sind Flügelbereiche 11 vorgesehen, welche in Umfangsrichtung einen Umfangswinkelbereich überdecken, welcher den von dem von der breiteren Nut überdeckten Umfangswinkelbereich umfasst.

Somit begrenzen die Flügelbereiche 11 das Führungsteil 5 in radialer Richtung. Durch das Führungsteil 5 ist das Kabel 4 radial hindurchgeführt. Da der Grundabschnitt in der breiteren Nut angeordnet ist, ist das Führungsteil 5 in Umfangsrichtung begrenzt, insbesondere formschlüssig verbunden mit dem Bodenmaterial 1.

Der Grundabschnitt ragt auch aus der breiteren Nut heraus in die Stufenbohrung hinein. Dabei überdeckt der vom Grundabschnitt überdeckte Radialabstandsbereich den von der Stufe der Stufenbohrung überdeckten Radialabstandsbereich. Dabei mündet der Grundabschnitt unterhalb der Stufe in die Stufenbohrung und führt somit das Kabel 4 ebenfalls unterhalb der Stufe in die Stufenbohrung ein. Das Kabel verläuft dann in der Stufenbohrung zur Kabelverschraubung 20 und dort hinein in die Ladeeinheit.

Die Stufenbohrung weist oberhalb der Stufe einen größeren lichten Innendurchmesser auf als unterhalb der Stufe.

Zur Aufnahme des Grundabschnitts durchbricht die breitere Nut die Stufe.

Die Stufe befindet sich ungefähr in derselben Tiefe wie die erste Bewehrung 9.

Das Rahmenteil 7 weist an seiner Unterseite vorzugsweise Einstellschrauben auf, so dass es mit diesen Einstellschrauben aufliegt auf der Stufe und durch Betätigen der Schrauben ausrichtbar ist. Auf diese Weise ist ein bündiges Ausrichten der Ladeeinheit zur umgebenden Verfahrfläche ermöglicht. Mittels der nachfolgend eingebrachten Vergussmasse 8 ist nach deren Aushärten eine Fixierung des Rahmenteils 7 bewirkt.

Das Rahmenteil 7 weist auch einen umlaufenden, sich nach oben erhebenden radialen Außenrand auf, sodass die Ladeeinheit in einfacher Weise aufnehmbar und zentrierbar ist. Vorzugsweise wird die Ladeeinheit schraubverbunden mit dem Rahmenteil.

Durch die vorkomplettierte Herstellung der Ladeeinheit ist eine einfache Montage ermöglicht. Hierzu muss das Kabel 4 vor Aufnahme der Ladeeinheit im Rahmenteil 7 durch die Kabelverschraubung 20 geführt und elektrisch verbunden werden. Danach ist ein Einführen der Ladeeinheit in das Rahmenteil 7 ermöglicht.

Bei weiteren erfindungsgemäßen Ausführungsbeispielen wird statt der Nut an der Unterseite des oberen Deckelteils ein Träger aufgenommen, welcher die Primärwicklung aufnimmt.

### Bezugszeichenliste

- 1: Bodenmaterial, insbesondere Betonmaterial
- 2: Beschichtung
- 3: Nut
- 4: Kabel
- 5: Kabelführungsteil
- 6: Deckelteil
- 7: Rahmenteil
- 8: Verguss
- 9: erste Bewehrung
- 10: zweite Bewehrung
- 11: Flügelbereich
- 20: Kabelverschraubung
- 21: Aufnahmeteil
- 22: unteres Deckelteil

## Patentansprüche

1. Systems zur berührungslosen Übertragung von elektrischer Energie an ein auf einem Boden einer Anlage verfahrbares Mobilteil,
wobei im Bodenmaterial (1) des Bodens eine Stufenbohrung eingebracht ist, insbesondere angeordnet ist,
wobei ein Rahmenteil (7) auf der Stufe der Stufenbohrung, insbesondere aufliegend, angeordnet ist,
wobei eine Ladeeinheit vom Rahmenteil (7) aufgenommen ist,
wobei die Ladeeinheit ein Aufnahmeteil (21) aufweist, dass zwischen einem oberen Deckelteil (6) und einem unteren Deckelteil (22) angeordnet ist,
wobei an der Innenseite des oberen Deckelteils (6) eine Primärwicklung angeordnet ist,
wobei die Primärwicklung von einer elektronischen Schaltung gespeist wird,
die mittels eines Kabels (4) mit elektrischer Energie versorgt wird,
**dadurch gekennzeichnet, dass**
das Kabel (4) zumindest teilweise in einem Kabelführungsteil (5) aufgenommen ist,
wobei das Kabelführungsteil (5) in einer bezogen auf die Stufenbohrung, insbesondere von der Bohrungsmittelachse, radial sich erstreckenden Nut (3) angeordnet ist,
wobei die Nut (3) durch die Stufe der Stufenbohrung hindurchgeführt ist,
so, dass das Kabel (4) unterhalb der Stufe der Stufenbohrung zugeführt wird,
wobei die Nut (3) in demjenigen ersten Bereich, in welchem das Kabelführungsteil (5) aufgenommen ist, insbesondere in Umfangsrichtung breiter ist als in einem radial weiter entfernten zweiten Bereich, insbesondere als in einem radial weiter außen angeordneten zweiten Bereich, insbesondere wobei der vom zweiten Bereich überdeckte Radialabstandsbereich größer ist als der vom ersten Bereich überdeckte Radialabstandsbereich,
insbesondere wobei die Nut (3) im zweiten Bereich oberhalb der Stufe angeordnet ist.

2. System nach Anspruch 1,
**dadurch gekennzeichnet, dass**
an der Unterseite des Mobilteils eine Sekundärwicklung angeordnet ist, welche mit der Primärwicklung mittels Erreichen eines Bereichs in der Verfahrfläche induktiv koppelbar ist.

3. System nach mindestens einem der vorangegangenen Ansprüche,
**dadurch gekennzeichnet, dass**
das Kabel (4) durch eine an dem unteren Deckelteil (22) angeordnete Kabelverschraubung (20) in die Ladeeinheit eingeführt ist.

4. System nach mindestens einem der vorangegangenen Ansprüche,
**dadurch gekennzeichnet, dass**
das Kabelführungsteil (5) einen in Umfangsrichtung aus einem Grundabschnitt, also Grundbereich, des Kabelführungsteils (5) hervorragenden Flügelbereich (11) aufweist, welcher das Kabelführungsteil (5) in Nutrichtung begrenzt, insbesondere also ein Hineinbewegen des Kabelführungsteils (5) in die Nut (3) begrenzt.

5. System nach mindestens einem der vorangegangenen Ansprüche,
**dadurch gekennzeichnet, dass**
der vom Grundabschnitt überdeckte Radialabstandsbereich den vom Rahmenteil (7) und/oder von der Stufe überdeckten Radialabstandsbereich umfasst.

6. System nach mindestens einem der vorangegangenen Ansprüche,
**dadurch gekennzeichnet, dass**
der vom Grundabschnitt überdeckte Radialabstandsbereich mit dem vom ersten Bereich der Nut (3) überdeckten Radialabstandsbereich überlappt.

7. System nach mindestens einem der vorangegangenen Ansprüche,
**dadurch gekennzeichnet, dass**
das obere Deckelteil (6) mit dem Aufnahmeteil (21) dicht verbunden ist, insbesondere schraubverbunden ist,
und/oder dass
das untere Deckelteil (22) mit dem Aufnahmeteil (21) dicht verbunden ist, insbesondere schraubverbunden ist.

8. System nach mindestens einem der vorangegangenen Ansprüche,
**dadurch gekennzeichnet, dass**
eine elektronische Schaltung in dem vom Aufnahmeteil (21) zusammen mit dem oberen Deckelteil (6) und dem unteren Deckelteil (22) insbesondere gehäusebildend umgebenen Raumbereich angeordnet ist,
insbesondere wobei die elektronische Schaltung mittels des Kabels (4) versorgt wird mit elektrischer Leistung und wobei die Primärwicklung von der elektronischen Schaltung gespeist wird,
insbesondere wobei die elektronische Schaltung einen Wechselrichter aufweist, welcher über einen Gyrator einen Strom in die Primärwicklung einprägt.

9. System nach mindestens einem der vorangegangenen Ansprüche,
**dadurch gekennzeichnet, dass**
das obere Deckelteil (6) aus Kunststoff, insbesondere aus für Licht transparentem Kunststoff ausgeführt ist, insbesondere so dass ein Anzeigemittel von der Verfahrfläche aus sichtbar ist. insbesondere wobei die elektronische Schaltung das Anzeigemittel aufweist.

10. System nach mindestens einem der vorangegangenen Ansprüche,
**dadurch gekennzeichnet, dass**
der von der Stufenbohrung in Bohrungsrichtung überdeckte Bereich, insbesondere also der von der Stufenbohrung von der Verfahrfläche aus in Richtung der Mittelachse der Stufenbohrung überdeckte Bereich, den von einer im Bodenmaterial (1) angeordneten Bewehrung (9) in Bohrungsrichtung überdeckten Bereich umfasst.

11. System nach mindestens einem der vorangegangenen Ansprüche,
**dadurch gekennzeichnet, dass**
das Rahmenteil (7) an seiner der Stufe zugewandten Seite Einstellschrauben aufweist zum Ausrichten des Rahmenteils (7).

12. System nach mindestens einem der vorangegangenen Ansprüche,
**dadurch gekennzeichnet, dass**
das Rahmenteil (7) einen in Umfangsrichtung umlaufenden zur Verfahrfläche hervorragenden radialen Außenrandberiech aufweist, so dass die Ladeeinheit zentrierend aufgenommen ist im Aufnahmeteil (21).

13. System nach mindestens einem der vorangegangenen Ansprüche,
**dadurch gekennzeichnet, dass**
der Boden Bodenmaterial (1) aufweist, auf welchem eine Beschichtung (2) angeordnet ist, deren Oberfläche als Verfahrfläche für das Mobilteil fungiert.

14. System nach mindestens einem der vorangegangenen Ansprüche,
**dadurch gekennzeichnet, dass**
das obere Deckelteil (6) bündig zur Verfahrfläche angeordnet ist, insbesondere also die obere Oberfläche des Deckelteils (6) in Flucht ist mit der Verfahrfläche.

## Claims

1. A system for the contactless transmission of electrical energy to a mobile part movable on a base of an installation,
wherein a stepped bore is made, in particular is arranged, in the base material (1) of the base,
wherein a frame part (7) is arranged on the step of the stepped bore, in particular rests thereon,
wherein a charging unit is received by the frame part (7),
wherein the charging unit has a receiving part (21), which is arranged between an upper cover part (6) and a lower cover part (22),
wherein a primary winding is arranged at the inner side of the upper cover part (6),
wherein the primary winding is fed by an electronic circuit, which is supplied with electrical energy by means of a cable (4),
**characterised in that**
the cable (4) is at least partially received in a cable guide part (5),
wherein the cable guide part (5) is arranged in a groove (3) extending radially with regard to the stepped bore, in particular from the bore central axis,
wherein the groove (3) is passed through the step of the stepped bore,
so that the cable (4) is fed below the step of the stepped bore,
wherein **in that** first region in which the cable guide part (5) is received, the groove (3) is wider, in particular in a circumferential direction, than in a radially more distant second region, in particular than in a second region arranged radially further outwards, in particular wherein the radially spaced region covered by the second region is greater than the radially spaced region covered by the first region,
in particular wherein in the second region, the groove (3) is arranged above the step.

2. A system according to claim 1,
**characterised in that**
a secondary winding is arranged at the underside of the mobile part, which secondary winding can be inductively coupled to the primary winding by means of reaching a region in the travel surface.

3. A system according to at least one of the preceding claims,
**characterised in that**
the cable (4) is introduced into the charging unit through a screwed cable gland (20) arranged at the lower cover part (22).

4. A system according to at least one of the preceding claims,
**characterised in that**
the cable guide part (5) has a wing region (11) projecting in a circumferential direction from a base portion, therefore base region, of the cable guide part (5), which wing region (11) restricts the cable guide part (5) in the groove direction, in particular therefore restricts motion of the cable guide part (5) into the groove (3).

5. A system according to at least one of the preceding claims,
**characterised in that**
the radially spaced region covered by the base portion encompasses the radially spaced region covered by the frame part (7) and/or by the step.

6. A system according to at least one of the preceding claims,
**characterised in that**
the radially spaced region covered by the base portion overlaps with the radially spaced region covered by the first region of the groove (3).

7. A system according to at least one of the preceding claims,
**characterised in that**
the upper cover part (6) is tightly connected to the receiving part (21), in particular is screw-connected,
and/or **in that**
the lower cover part (22) is tightly connected to the receiving part (21), in particular is screw-connected.

8. A system according to at least one of the preceding claims,
**characterised in that**
an electronic circuit is arranged in the spatial region surrounded, in particular in a housing-forming manner, by the receiving part (21) together with the upper cover part (6) and the lower cover part (22),
in particular wherein the electronic circuit is supplied with electric power by means of the cable (4) and wherein the primary winding is fed by the electronic circuit,
in particular wherein the electronic circuit has an inverter, which applies a current to the primary winding via a gyrator.

9. A system according to at least one of the preceding claims,
**characterised in that**
the upper cover part (6) is of plastics material, in particular of a plastics material transparent to light, in particular so that a display means is visible from the travel surface, in particular wherein the electronic circuit has the display means.

10. A system according to at least one of the preceding claims,
**characterised in that**
the region covered by the stepped bore in the boring direction, in particular therefore the region covered by the stepped bore from the travel surface in the direction of the central axis of the steeped bore, encompasses the region covered in the boring direction by a reinforcement (9) arranged in the base material (1).

11. A system according to at least one of the preceding claims,
**characterised in that**
the frame part (7) has, at its side facing the step, adjusting screws for alignment of the frame part (7).

12. A system according to at least one of the preceding claims,
**characterised in that**
the frame part (7) has a radial outer-edge region encircling in a circumferential direction and projecting towards the travel surface, so that the charging unit is received in a centring manner in the receiving part (21).

13. A system according to at least one of the preceding claims,
**characterised in that**
the base has base material (1) on which there is arranged a coating (2) whose surface acts as a travel surface for the mobile part.

14. A system according to at least one of the preceding claims,
**characterised in that**
the upper cover part (6) is arranged flush with the travel surface, in particular therefore the upper surface of the cover part (6) is in alignment with the travel surface.

## Revendications

1. Système de transmission sans contact d'énergie électrique à une partie mobile pouvant se déplacer sur un sol d'une installation,
dans lequel un alésage à gradin est réalisé, en particulier disposé, dans le matériau de sol (1) du sol,
dans lequel une partie cadre (7) est disposée sur le gradin de l'alésage à gradin, en particulier repose sur celui-ci,
dans lequel une unité de charge est reçue par la partie cadre (7),
dans lequel l'unité de charge présente une partie de réception (21) qui est disposée entre une partie couvercle supérieure (6) et une partie couvercle inférieure (22), dans lequel un enroulement primaire est disposé à l'intérieur de la partie couvercle supérieure (6),
dans lequel l'enroulement primaire est alimenté par un circuit électronique qui est alimenté en énergie électrique au moyen d'un câble (4),
**caractérisé en ce que**
le câble (4) est au moins partiellement reçu dans une partie de guidage de câble (5),
dans lequel la partie de guidage de câble (5) est disposée dans une rainure (3) s'étendant radialement par rapport à l'alésage à gradin, en particulier par rapport à l'axe central d'alésage,
dans lequel la rainure (3) est passée à travers le gradin de l'alésage à gradin de telle sorte que le câble (4) est amené sous le gradin de l'alésage à gradin,
dans lequel la rainure (3) est plus large, en particulier dans la direction circonférentielle, dans la première zone dans laquelle la partie de guidage de câble (5) est reçue que dans une deuxième zone radialement plus éloignée, en particulier que dans une deuxième zone disposée radialement plus à l'extérieur, en particulier dans lequel la plage de distance radiale couverte par la deuxième zone est plus grande que la plage de distance radiale couverte par la première zone,
en particulier dans lequel la rainure (3) est disposée au-dessus du gradin dans la deuxième zone.

2. Système selon la revendication 1,
**caractérisé en ce**
**qu'**un enroulement secondaire est disposé sur la face inférieure de la partie mobile, lequel peut être couplé par induction à l'enroulement primaire en atteignant une zone dans la surface de roulement.

3. Système selon au moins l'une des revendications précédentes,
**caractérisé en ce que**
le câble (4) est introduit dans l'unité de charge à travers un passe-câble (20) disposé sur la partie couvercle inférieure (22).

4. Système selon au moins l'une des revendications précédentes,
**caractérisé en ce que**
la partie de guidage de câble (5) présente une zone formant une aile (11) qui fait saillie dans la direction circonférentielle depuis une section de base, donc une zone de base, de la partie de guidage de câble (5) et qui limite la partie de guidage de câble (5) dans la direction de la rainure, donc qui limite en particulier un engagement de la partie de guidage de câble (5) dans la rainure (3).

5. Système selon au moins l'une des revendications précédentes,
**caractérisé en ce que**
la plage de distance radiale couverte par la section de base comprend la plage de distance radiale couverte par la partie cadre (7) et/ou par le gradin.

6. Système selon au moins l'une des revendications précédentes,
**caractérisé en ce que**
la plage de distance radiale couverte par la section de base chevauche la plage de distance radiale couverte par la première zone de la rainure (3).

7. Système selon au moins l'une des revendications précédentes,
**caractérisé en ce que**
la partie couvercle supérieure (6) est reliée de manière étanche, en particulier par vissage, à la partie de réception (21),
et/ou que
la partie couvercle inférieure (22) est reliée de manière étanche, en particulier par vissage, à la partie de réception (21).

8. Système selon au moins l'une des revendications précédentes,
**caractérisé en ce**
**qu'**un circuit électronique est disposé dans la zone d'espace entourée par la partie de réception (21) conjointement avec la partie couvercle supérieure (6) et la partie couvercle inférieure (22), en particulier de manière à former un boîtier,
en particulier dans lequel le circuit électronique est alimenté en énergie électrique au moyen du câble (4) et l'enroulement primaire est alimenté par le circuit électronique,
en particulier dans lequel le circuit électronique présente un onduleur qui applique un courant dans l'enroulement primaire par l'intermédiaire d'un gyrateur.

9. Système selon au moins l'une des revendications précédentes,
**caractérisé en ce que**
la partie couvercle supérieure (6) est réalisée en matière plastique, en particulier en matière plastique transparente à la lumière, en particulier de telle sorte qu'un moyen d'affichage soit visible depuis la surface de roulement, en particulier dans lequel le circuit électronique présente le moyen d'affichage.

10. Système selon au moins l'une des revendications précédentes,
**caractérisé en ce que**
la zone couverte par l'alésage à gradin dans la direction de l'alésage, en particulier donc la zone couverte par l'alésage à gradin depuis la surface de roulement dans la direction de l'axe central de l'alésage à gradin, comprend la zone couverte dans la direction de l'alésage par une armature (9) disposée dans le matériau de sol (1).

11. Système selon au moins l'une des revendications précédentes,
**caractérisé en ce que**
la partie cadre (7) présente sur son côté tourné vers le gradin des vis de réglage pour aligner la partie cadre (7).

12. Système selon au moins l'une des revendications précédentes,
**caractérisé en ce que**
la partie cadre (7) présente une zone de bordure extérieure radiale faisant saillie dans la direction circonférentielle vers la surface de roulement, de telle sorte que l'unité de charge est reçue de manière centrée dans la partie de réception (21).

13. Système selon au moins l'une des revendications précédentes,
**caractérisé en ce que**
le sol comprend un matériau de sol (1) sur lequel est disposé un revêtement (2), dont la surface fait fonction de surface de roulement pour la partie mobile.

14. Système selon au moins l'une des revendications précédentes,
**caractérisé en ce que**
la partie couvercle supérieure (6) est disposée en affleurement avec la surface de roulement, en particulier donc la surface supérieure de la partie couvercle (6) est en alignement avec la surface de roulement.
